# EUROPEAN PATENT SPECIFICATION

(11) **EP 1 119 176 B1**
(45) Date of publication and mention of the grant of the patent: **01.03.2006**
(21) Application number: 00128006.4
(22) Date of filing: 20.12.2000
(51) Int. Cl.: H04N 1/00, H04N 1/21, H04N 5/232, G03B 29/00

(54) **A portable image capturing device**
Tragbare Bildaufnahmevorrichtung
Dispositif portatif de capture d'image

(30) Priority: 28.12.1999 JP 37402499; 10.10.2000 JP 2000309375
(43) Date of publication of application: 25.07.2001
(73) Proprietor: CASIO COMPUTER CO., LTD., Shibuya-ku, Tokyo 151-8543 (JP)
(72) Inventor: Yamaguchi, Ryusuke, c/oCasio Computer Co.,Ltd. IPC, Hamura-shi, Tokyo 205-8555 (JP); Nagatomo, Shoichi, c/oCasio Computer Co.,Ltd. IPC, Hamura-shi, Tokyo 205-8555 (JP)
(74) Representative: Grünecker, Kinkeldey, Stockmair & Schwanhäusser Anwaltssozietät

(56) References cited:
- EP-A- 0 790 734
- EP-A- 0 935 162
- EP-A- 0 936 808
- WO-A-95/34988
- PATENT ABSTRACTS OF JAPAN vol. 018, no. 124 (E-1517), 28 February 1994 (1994-02-28) & JP 05 316397 A (MITSUBISHI ELECTRIC CORP), 26 November 1993 (1993-11-26)
- PATENT ABSTRACTS OF JAPAN vol. 011, no. 178 (P-584), 9 June 1987 (1987-06-09) & JP 62 009289 A (CASIO COMPUT CO LTD), 17 January 1987 (1987-01-17)

## Description

The present invention relates to a portable image capturing device which has an optical communication function, e.g. , infrared communication or the like, and an image capturing function, e.g., a digital camera or the like.

An optical communication technique which carries out data communication with an external device by using light signal is known.

In the electronic apparatus having such a function, there is a portable electronic apparatus, e.g., a PDA or a digital still camera, having the infrared communication function, to convert data to infrared ray signal and to carry out data communication with the external device by using the signal, as one of optical communication. Such a portable electronic apparatus comprises an infrared ray emitting element having an infrared-emitting diode and the like, for sending infrared ray signal, and an infrared detecting element having a photodiode and the like for receiving the infrared ray signal, as a construction to realize the infrared communication function.

In a portable electronic apparatus having the infrared communication function, in order to carry out data communication with an external electronic device, e.g., a PC or the like, an infrared communication window comprising transparent parts is formed in a case body, and a cover for infrared communication, which is made by forming an optical filter material is provided on the window, to cover the infrared ray emitting element and the infrared detecting element which are provided inside.

The cover for infrared communication cuts the wavelengths contributing to interruptions for communication during infrared communication, to improve the reliability of data.

In such a portable electronic apparatus having the infrared communication function, in particular, in a capturing device, e.g., digital camera or the like, it is required to provide an infrared communication portion and a camera unit individually. However, it is difficult to arrange the infrared communication portion and the camera unit individually to each other because of ensuring a good portability. Therefore, it is supposed that the problems of inconvenience of user's handling the portable electronic apparatus, e.g., on confirmation of captured images, transmission of capturing image data to an external device, or the like.

EP 0 936 808 A1 describes a portable wrist watch that comprises an image capturing unit having a lens in an opening. Further, there is an electronic module provided for processing digital data corresponding to the images and transmitting them to an electronic remote receiver. The data transfer may be done at radio frequencies or in the infrared range.

JP 05 316397 A discloses a video camera having an image pickup lens and an image pickup element. Further, a light emitting element is provided for sending an optical signal in a cordless way, where the optical signal is a digitally processed video signal.

It is the object of the invention to provide a portable image capturing device capable of reducing the number of necessary components and the number of steps for assembling.

This object is solved by the invention as claimed in the independent claims.

Preferred embodiments are defined in the dependent claims.

In an embodiment, the invention provides a portable image capturing device which has an optical communication function, in particular, an infrared communication function, and an image capturing function and which improves the convenience of user's handling.

The invention allows to reduce the number of necessary components and the number of steps for assembling by covering both the image capturing portion (camera portion) and the optical communication portion (infrared communication portion) in common by a transparent covering member.

In accordance with one aspect of the present invention, the portable image capturing device, comprises: a device body, an image capturing portion (camera portion) and an optical communication portion (infrared communication portion), which are provided on the device body, and a transparent covering member for covering both the image capturing portion and the optical communication portion, which is provided on the device body.

According to the present invention, because the image capturing portion and an optical communication are provided adjacent to each other on the device body, it is possible to improve the convenience on user's handling and to reduce the number of necessary components and the number of steps for assembling by covering both the image capturing portion and the optical communication portion in common by a transparent covering member.
FIG. 1 is a plan view showing the entirety of a portable image capturing device, as an embodiment of the invention;
FIG. 2 is an enlarged plan view of the device body shown in FIG. 1;
FIG. 3 is a perspective view of the device body shown in FIG. 2;
FIG. 4 is a front view showing the camera portion and the optical communication portion (infrared communication portion) in the device body shown in FIG. 3;
FIG. 5 is a side view of the device body shown in FIG. 4;
FIG. 6 is a perspective view of only the device body shown in FIG. 3, from the side opposite to the camera portion (image capturing portion) and the optical communication portion (infrared communication portion) at an angle;
FIG. 7 is a bottom view of the body portion of the device shown in FIG. 6, in which the camera portion and the optical communication portion (infrared communication portion) are shown in cross section and the inner module is shown without the case back;
FIG. 8 is a cross-sectional view taken on line A-A of FIG. 7;
FIG. 9 is a cross-sectional view taken on line B-B of FIG. 7;
FIG. 10 is an exploded perspective view showing the cover structure of the camera portion and the optical communication portion (infrared communication portion), which are shown in FIG. 4;
FIG. 11 is a bottom view of the device body shown in FIG. 6;
FIG.12 is an exploded perspective view showing the case back, the ring for waterproof, and the battery cover, which are attached to the rear surface of the device body shown in FIG. 1;
FIG. 13 is an enlarged perspective view showing the structure of the rear side of the battery cover shown in FIG. 12;
FIG. 14 is an exploded perspective view showing the case back shown in FIG. 12;
FIG. 15 is a cross-sectional view taken on line C-C of FIG. 14;
FIG. 16 is a rear view of the case back shown in FIG. 14;

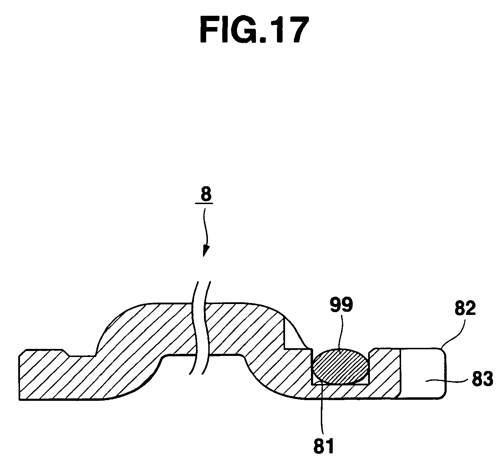

FIG. 17 is an enlarged cross-sectional view taken on line D-D of FIG. 16;
FIG. 18A is a front view showing the structure of the battery cover shown in FIG. 13, and FIG. 18B is a rear view thereof;
FIG. 19 is a cross-sectional view taken on line E-E of FIG. 18B;

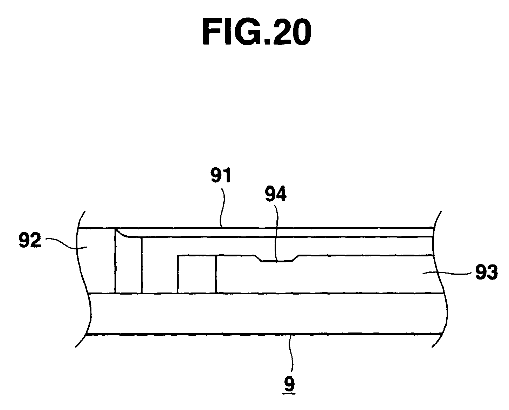

FIG. 20 is an enlarged side view of the "F" portion of FIG. 19;
FIGS. 21A and 21B show the attachment relationship between the battery cover and the case back, from the rear side, in which FIG. 21A is a view when inserting the battery cover into the case back, and FIG. 21B is a view when rotating the battery cover to lock to the case back;
FIG. 22 is an exploded perspective view showing the cover structure of the camera portion and the optical communication portion (infrared communication portion), as the second embodiment of the invention;
FIG. 23 is an exploded perspective view showing the cover structure of the camera portion and the optical communication portion (infrared communication portion), as the third embodiment of the invention;
FIG. 24 is a bottom view of the device body shown in FIG. 23, in which the camera portion and the optical communication portion (infrared communication portion) are shown in cross section;
FIG. 25 is a cross-sectional view taken on line C-C of FIG. 24;
FIG. 26 is an exploded perspective view showing the cover structure of the camera portion and the optical communication portion (infrared communication portion), as the fourth embodiment of the invention;

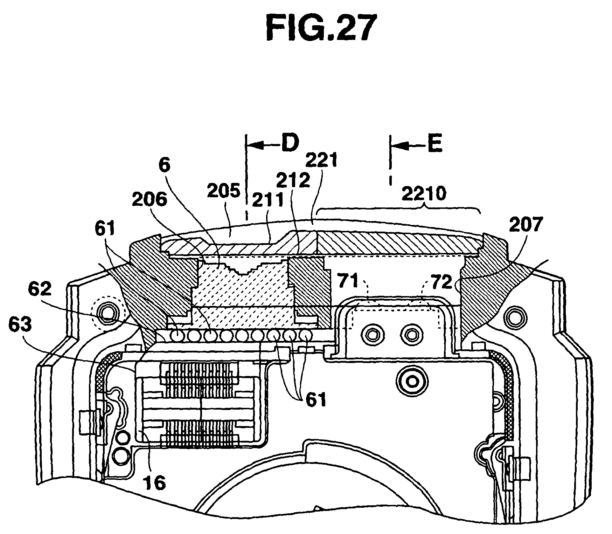

FIG. 27 is a bottom view of the device body shown in FIG. 26, in which the camera portion and the optical communication portion (infrared communication portion) are shown in cross section;

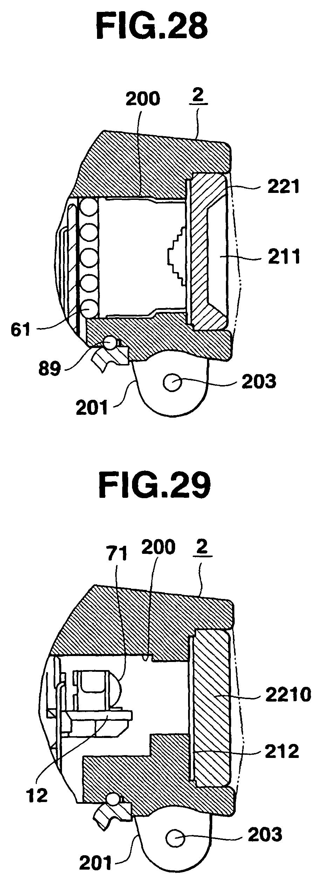

FIG. 28 is a cross-sectional view taken on line D-D of FIG. 27;
FIG. 29 is a cross-sectional view taken on line E-E of FIG. 27;
FIG. 30 is an exploded perspective view showing the cover structure of the camera portion and the optical communication portion (infrared communication portion), as the fifth embodiment of the invention;
FIG. 31 is a bottom view of the device body shown in FIG. 30, in which the camera portion and the optical communication portion (infrared communication portion) are shown in cross section;
FIG. 32 is an enlarged plan view of the device body, as the sixth embodiment of the invention;
FIG. 33 is an exploded perspective view showing the relationship between the device body shown in FIG. 32 and another infrared communication apparatus;
FIG. 34 is an enlarged plan view of the device body, as the seventh embodiment of the invention; and
FIG. 35 is a perspective view of the device body shown in FIG. 34.

### FIRST EMBODIMENT

The first embodiment of the invention will be explained in detail with reference to the drawings.

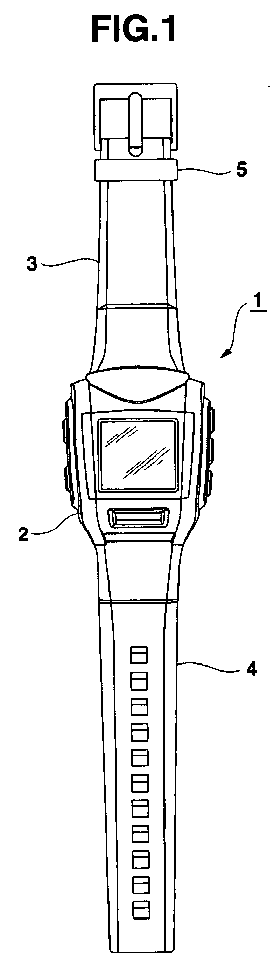

FIG. 1 is a plan view showing the entirety of a portable image capturing device, as an embodiment of the invention, in which the reference numeral 1 denotes a wrist watch (portable image capturing device), the numeral 2 denotes a case body (device body), the numerals 3 and 4 denote a pair of wrist bands, and the numeral 5 denotes a loop (band fastening member).

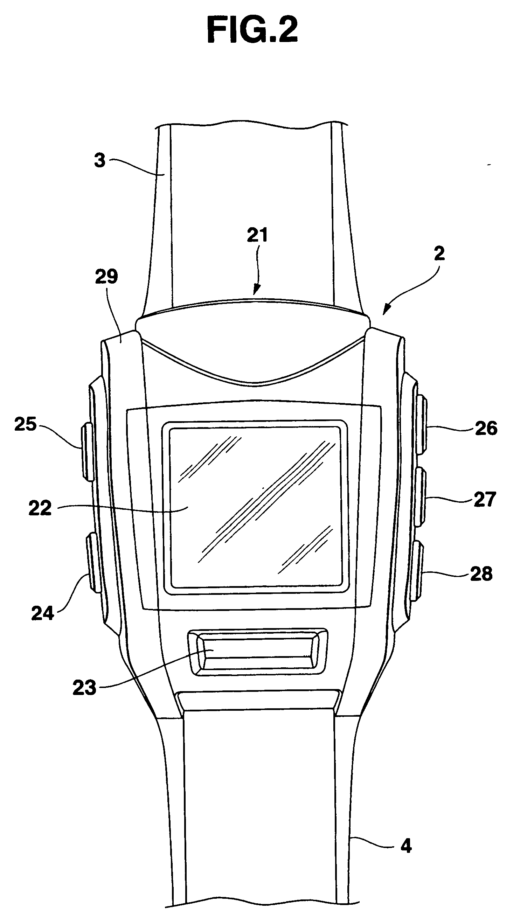

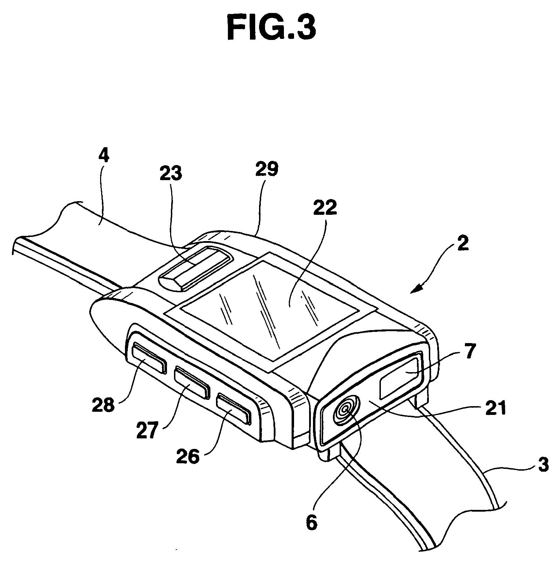

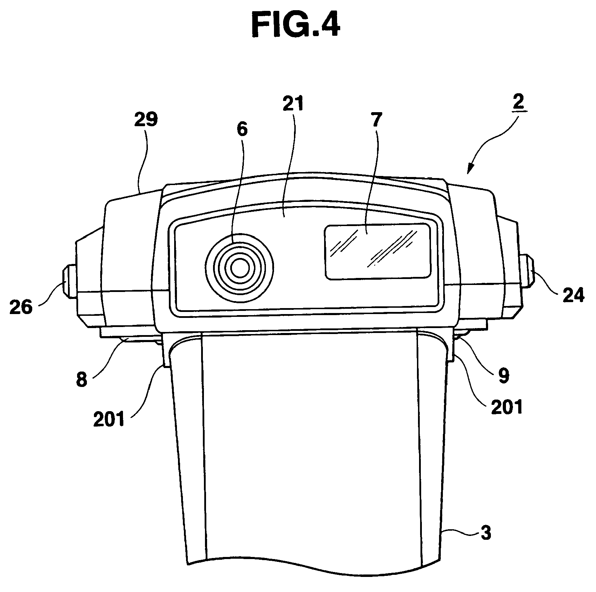

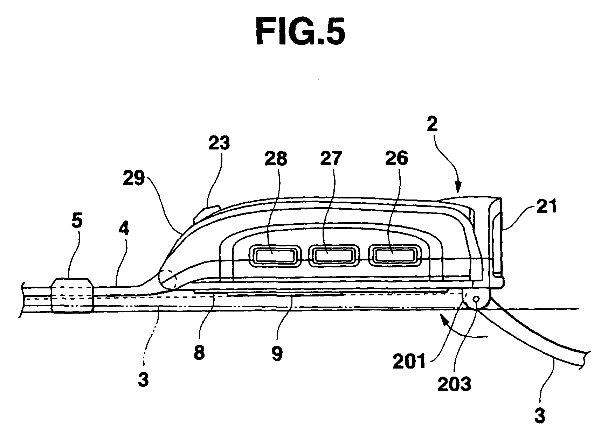

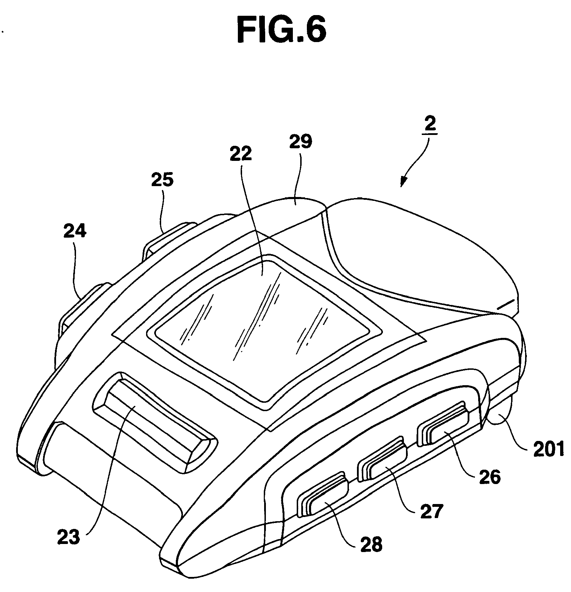

FIG. 2 is an enlarged plan view of the portion of the case body 2, FIG. 3 is a perspective view of the portion of the case body 2, FIG. 4 is a front view showing the camera portion (image capturing portion) and the optical communication portion in the portion of the case body 2, FIG. 5 is a side view of the portion of the case body 2, and FIG. 6 is a perspective view of only the portion of the case body 2, from the side opposite to the camera portion and the optical communication portion at an angle. In these figures, the reference numeral 6 denotes an image capturing lens (camera portion), the numeral 7 denotes an infrared communication portion (optical communication portion), the numeral 8 denotes a case back, the numeral 9 denotes a battery cover, the numeral 21 denotes a transparent covering member, the numeral 22 denotes a data display portion, the numeral 23 denotes a shutter button (shutter operating member), the numeral 24 denotes an adjustment key, the numeral 25 denotes a mode key, the numeral 26 denotes a reverse key, the numeral 27 denotes a display changing key, the numeral 28 denotes a forward key, and the numeral 29 denotes a bezel.

The case body 2 of the wrist watch 1 which is an application example of the portable image capturing device according to the invention has an end side surface at which a wrist band 3 is attached in the other side of the case body, in FIGS. 1 and 2. In the end side surface, the image capturing lens 6 which is the camera portion and the infrared communication portion 7 which is the optical communication portion are provided near to each other in parallel, as shown in FIGS. 3 and 4.

In the case body 2, the transparent covering member 21 which covers the image capturing lens 6 and the infrared communication portion 7 is provided on the end side surface, and the data display portion and the shutter button 23 are provided on the upper surface. The shutter button 23 is positioned in the opposite side to the image capturing lens 6 and the infrared communication portion 7 with respect to the data display portion 22. Shutter operation can be carried out by pushing the shutter button 23 toward the rear surface from the front surface in FIG. 3.

In a side surface of the case body 2, the adjustment key 24 and the mode key 25 are provided. In the other side surface of the case body 2, the reverse key 26, the display changing key 27, and the forward key 28 are provided. The reverse key 26 and the display changing key 27 are for making the data display portion 22 display a plurality of stored images and change them.

On the rear surface of the case body 2 near the transparent covering member 21, a pair of projecting band attachment portions 201 and 201 for attaching the wrist band 3 in the side of the image capturing lens 6 and the infrared communication portion 7 are provided, as shown in FIGS. 3-6. Between the pair of projecting band attachment portions 201 and 201, a band attachment bar 203 is attached. Therefore, the wrist band 3 attached to the band attachment bar 203 can be rotated on the attachment bar 203 to be overlapped on the rear surface of the case body 2, as shown by a line for supposition (two-dot chain line) in FIG. 5.

On the upper surface of the case body 2, the bezel 29 is assembled for shock resistance. To the rear surface of the case body 2, the case back 8 is locked securely by screws. To the central portion of the case back 8, the battery cover 9 is attached, as described later.

The attachment position of the band attachment bar 203 may be positioned in the rear surface side than the battery cover 9.

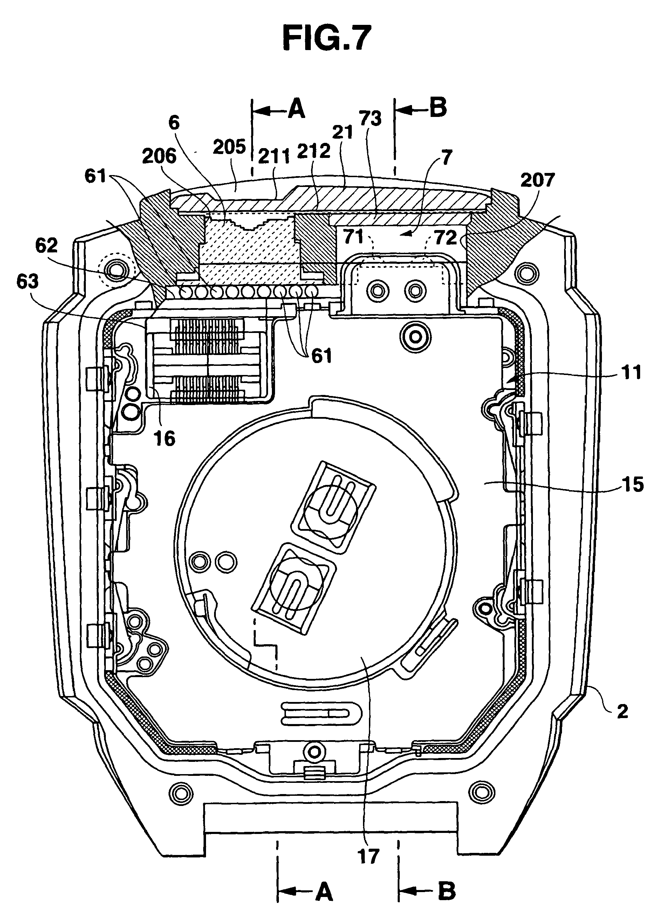

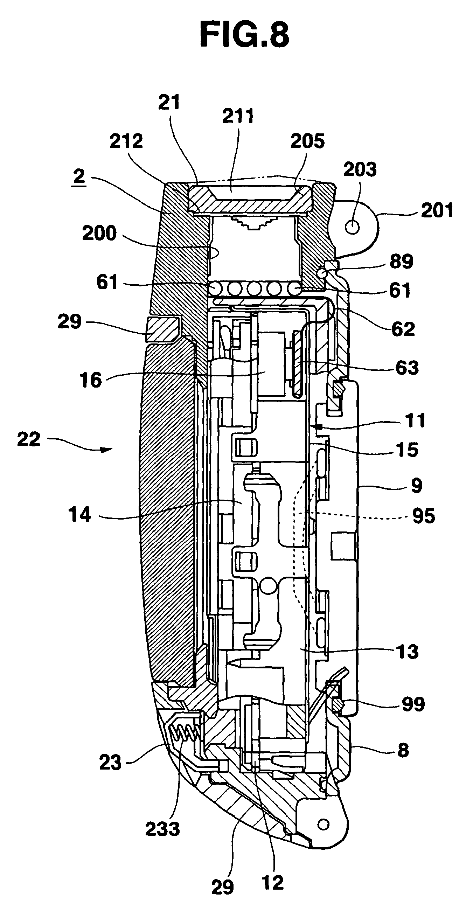

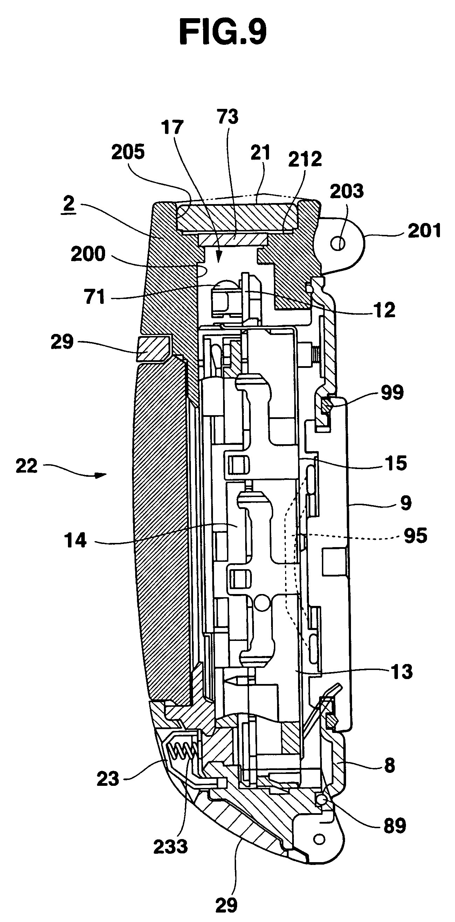

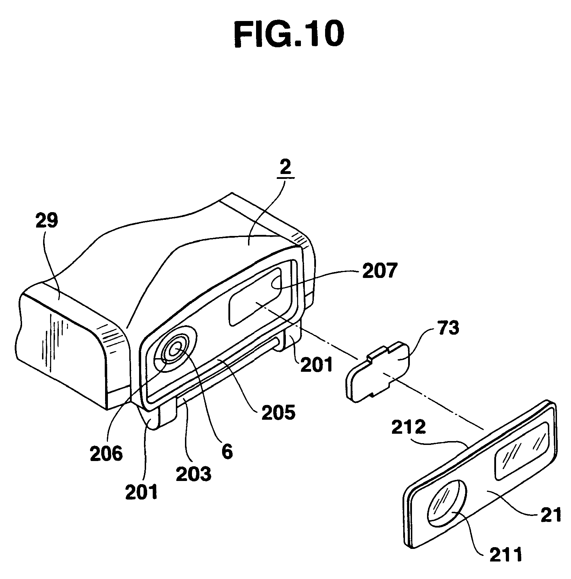

FIG. 7 is a bottom view showing the inner module in the case body 2 without the case back, in which the main portion is shown in cross section, FIG. 8 is a cross-sectional view taken on line A-A of FIG. 7, FIG. 9 is a cross-sectional view taken on line B-B of FIG. 7, and FIG. 10 is an exploded perspective view showing the cover structure of the image capturing lens 6 and the infrared communication portion 7. In these figures, the reference numeral 11 denotes a module, the numeral 12 denotes a board, the numerals 13 and 14 denote housings, the numeral 15 denotes a circuit supporter, the numeral 16 denotes a connector socket, the numeral 17 denotes a battery insertion portion, the numerals 61 denote solder balls (electric conductive member), the numeral 62 denotes an electrode film, the numeral 63 denotes a connector, the numeral 71 denotes an infrared emitting element, the numeral 72 denotes an infrared detecting element, the numeral 73 denotes a cover for infrared communication (filter member), and the numerals 89 and 99 denote O-rings (water proof members).

The module 11 has functions of watch, transmission and data display. The module 11 comprises the board 12 which has a various types of electronic components mounted thereon, the housings 13 and 14 provided in both sides thereof, the circuit supporter 15 provided in the rear side of the board 12, and the like. In a cut-out portion at a corner of the module 11, a connector socket 16 is provided, and at a central portion of the circuit supporter 15, the battery insertion portion 17 is provided.

The image capturing lens 6 is fitted into a capturing window 206 of the case body 2. The infrared communication portion 7 is disposed in a communication window 207 of the case body 2. The transparent covering member 21 is attached into a recess portion 205 for cover attachment, which opens in the end side surface of the case body 2, to cover both the image capturing lens 6 and the infrared communication portion 7.

In the image capturing lens 6, a CMOS (Complementary Metal-Oxide Semiconductor) for data conversion of signals from the infrared detecting element and for transfer thereof is installed. The electrode film 62 is connected with the image capturing lens 6 through many solder balls 61 which are the electric conductive member. The electrode film 62 is provided with a connector 63 at the end thereof.

The image capturing lens 6 is fitted in the capturing window 206 of the case body 2 before incorporating the module 11 into the case body.

The infrared communication portion 7 comprises the infrared emitting element 71 and the infrared detecting element 72, which are attached to the module 11. The module 11 is incorporated into the case body 2 so that the infrared emitting element 71 and the infrared detecting element 72 which make a pair are inserted into the communication window 207 of the case body 2.

After the connector 63 attached to the end of the electrode film 62 is fitted and connected to the connector socket 16 of the module 11, the case back 8 is locked securely by screws to the rear surface of the case body 2. Between the case body 2 and the case back 8, the 0-ring (water proof ring) 89 is sandwiched and between the case back 8 and the battery cover 9, the O-ring (water proof ring) 99 is sandwiched.

Then, the periphery of the cover 73 for infrared communication which is a filter member is melted and fixed to the periphery of the communication window 207, as shown in FIG. 10. Further, the periphery of the transparent covering member 21 having a convex lens shape is melted and fixed to the periphery of the recess portion 205 for cover attachment, to cover both the image capturing lens 6 and the infrared communication portion 7.

The transparent covering member 21 has a circular recess portion 211 on the front surface at a position corresponding to that of the image capturing lens 6. On the rear surface of the transparent covering member 21, a black printed layer 212 is formed at the portion except ones corresponding to the capturing window 206 and the communication window 207.

The shutter button 23 is provided to be slidable on a switch pin 231 (not shown) without slipping out from the switch pin, as shown in FIG. 9. The switch pin 231 is provided to be slidable on the case body 2 without slipping out from the case body. Around the switch pin 231, a compressed coil screw 232 (not shown) is provided between the shutter button 23 and the case body 2.

When pressing down the shutter button 23 against the biasing force of the compressed coil screw 232 and thereby pressing down the switch pin 231, the top end of the switch pin 231 is brought into contact with an electrode with a shape like teeth of a comb on the board 12. As a result, the shutter switch is changed to on to open the shutter of camera.

The shutter button 23 is biased by a compressed coil screw 233 which is disposed between the shutter button and the case body 2, in the projecting direction of the compressed coil screw at both ends thereof, as shown in FIGS. 8 and 9. Thus, the shutter button 23 is supported stably.

As described above, according to the embodiment of the invention, because the image capturing lens 6 and the infrared communication portion 7 are provided near to each other in parallel, in the end side surface of the wristwatch 1, it is possible to capturing an image by pressing down the shutter button 23 which is arranged in this side and also to communicate data, while putting it on an arm and using the data display portion 22 as a monitor, i.e., a finder.

Because the portable electronic apparatus of the embodiment can be used in a state of placing the case body 2 on a stable table or the like, with overlapping the wrist band 3 on the rear surface of the case body 2, as shown by the two-dot chain line in FIG. 5, it is possible to capturing an image and to communicate data, in a state of placing the case body 2 on an appropriate stable place and directing it in an appropriate direction.

Because both the image capturing lens 6 and the infrared communication portion 7 are covered by a transparent covering member 21, it is possible to reduce the number of necessary components and the number of steps for assembling.

Further, because the transparent covering member 21 with a convex lens shape has a circular recess portion 211 on the front surface at a position corresponding to that of the image capturing lens 6 and has a black printed layer 212 on the rear surface thereof at portions except ones corresponding to the capturing window 206 and the communication window 207, it does not interfere optically with capturing images through the image capturing lens 6 nor exert an adverse optical influence upon the image capturing lens 6 and the infrared communication portion, e.g., interference of optical axes to each other.

The circular recess portion 211 of the transparent covering member 21 may have a lens structure. No cover 73 for infrared communication may be provided by making the transparent covering member 21 by a filter member and by reducing the filter property by the circular recess portion 211.

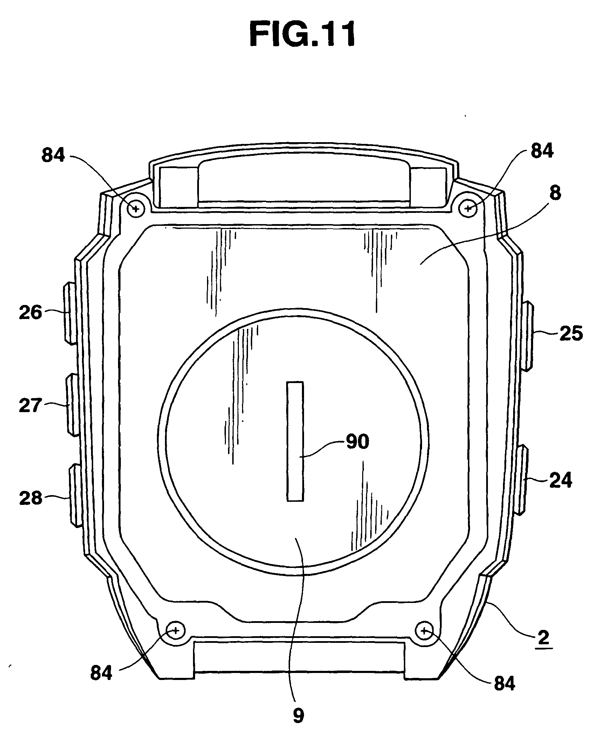

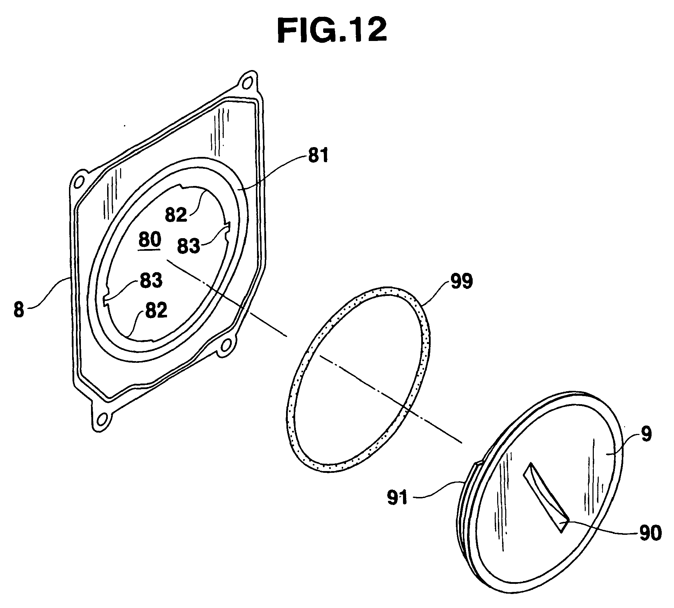

FIG. 11 is a bottom view of the case body 2 of the apparatus, and FIG.12 is an exploded perspective view showing the case back 8, the O-ring 99 for waterproof, and the battery cover 9, which are attached to the rear surface of the case body 2 of the apparatus.

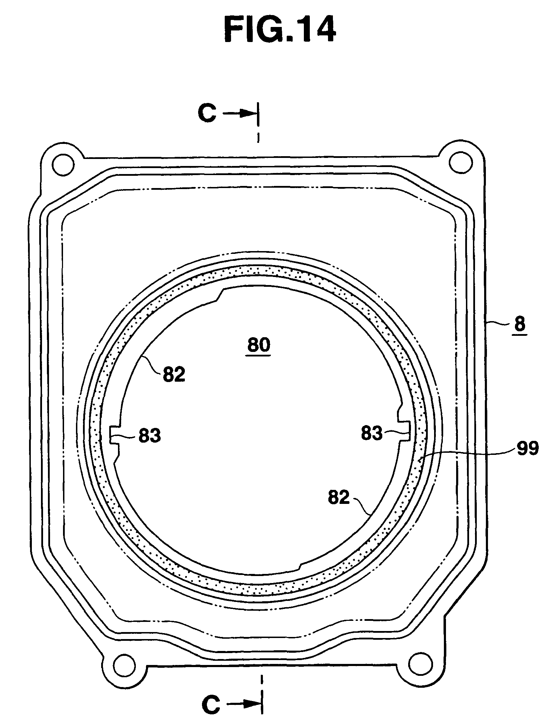

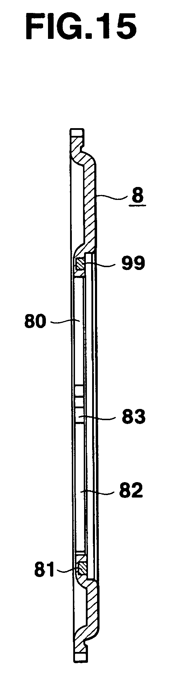

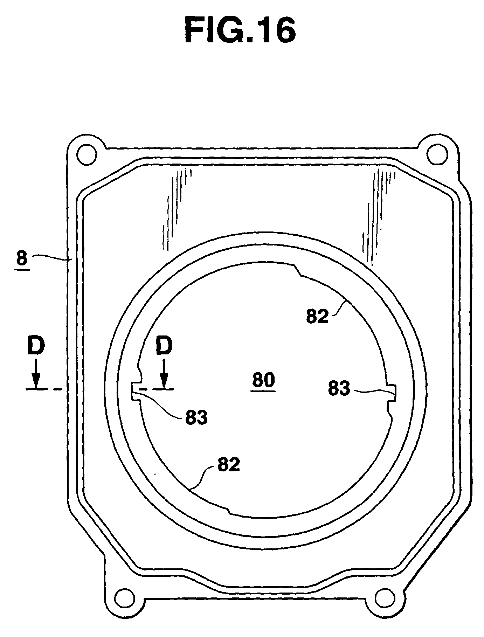

In the case back 8, an attachment hole 80 through which a battery can be attached is formed at the central portion, and a loop groove 81 for receiving a waterproof ring is formed in the surface around the attachment hole 80, as also shown in FIGS. 14 to 16. In the periphery of the attachment hole 80, a pair of flanges 82 and 82 which are faced to each other in a radial direction to have a smaller diameter. Each of the flanges 82 is formed at an approximate angle of 90°. At an end in one direction of each flange 82, a small cut-out 83 is formed.

In the loop groove 81 for receiving a waterproof ring of the case back 8, the O-ring 99 is fitted. The case back 8 is fixed to the rear surface of the case body 2 at four corners by using screws 84, as shown in FIG. 11. Between the case body 2 and the case back 8, the O-ring 99 is provided, as shown in FIGS. 8 and 9.

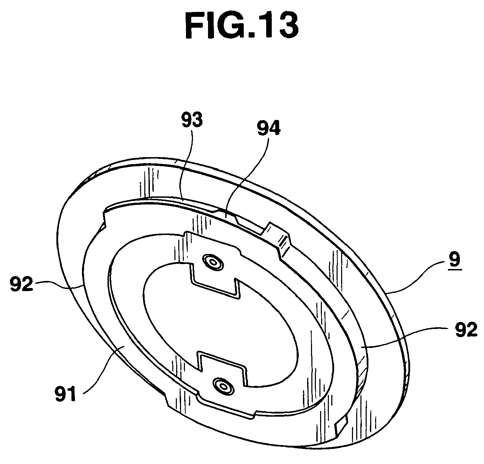

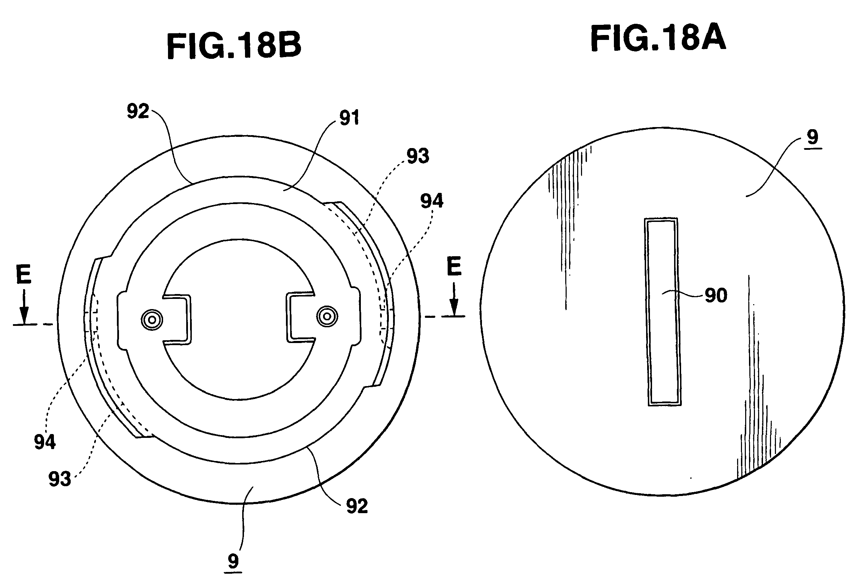

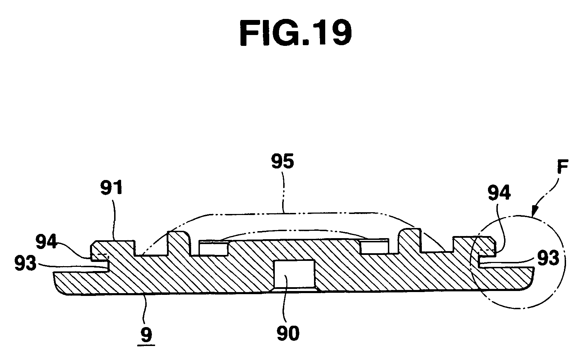

As shown in FIGS. 13, 18 and 19, in the front surface of the battery cover 9, a radial direction recess 90 which extends radially to pass through the center is formed, and in the rear surface thereof, a fitting portion 91 having a shape corresponding to the attachment hole 80 is provided. At the central portion of the.fitting portion 91, a battery clamp 95 which comprises a pair of plate springs facing to each other is attached.

On the periphery of the fitting portion 91, a pair of small diameter portions 92 and 92 are formed radially to have a shape fitting in the pair of flanges 82 and 82 of the case back 8, and a pair of large diameter portions are formed radially next to the small diameter portions 92 and 92. Between each large diameter portion and the front surface of the battery cover 9, a circumferential groove 93 with a diameter which can receive the small diameter flange 82 of the case back 8 and is closed at the bottom end. In the middle of each large diameter portion, a small projection 94 is formed toward the circumferential groove 93 at a position corresponding to that of the small cut-out 83 when rotating to insert the small diameter flange 82 into the circumferential groove 93 to the bottom.

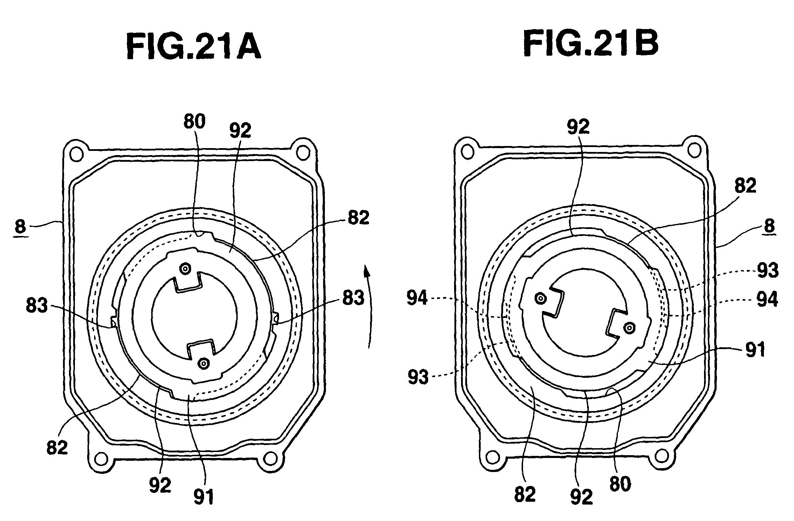

FIGS. 21A and 21B show the attachment relationship between the battery cover 9 and the case back 8, from the rear side, in which FIG. 21A is a view when inserting the battery cover 9 into the case back 8, and FIG. 21B is a view when rotating the battery cover 9 to lock to the case back 8.

In order to fix the battery cover 9 to the case back 8, the fitting portion 91 of the battery cover 9 is inserted into the attachment hole 80 of the case back 8, with fitting the small diameter portions 92 and 92 into the small diameter flanges 82 of the case back 8.

Thereafter, the battery cover 9 is rotated in the direction of the arrow in FIG. 21A (from the operator's point of view, in the clockwise direction) by inserting a coin into the radial direction recess 90 to rotate it. Then, the small diameter flanges 82 of the case back 8 are being inserted into the circumferential groove 93 of the battery cover 9 while the O-ring 99 in the loop groove 81 is being compressed against the peripheral rear surface of the battery cover 9.

When the small projections 94 in the circumferential grooves 93 reach the positions of the small cut-outs 83 in the flanges 82 of the case back 8, the operator can know the fact that the battery cover 9 has reached the rotational fixation position, by a click feeling.

In order to take the battery cover 9 off the case back 8, it may reverse the order of steps.

### SECOND EMBODIMENT

The second embodiment is different from the first embodiment in the following points.

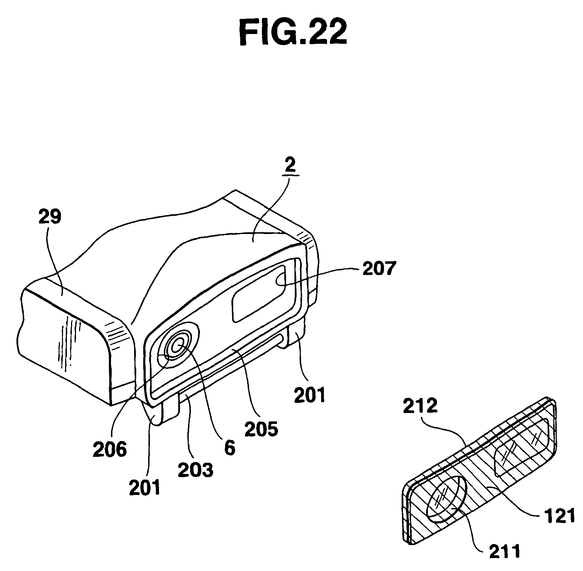

In the portable image capturing device according to the second embodiment, the cover 73 for an infrared communication in the first embodiment is not used, a transparent covering member 121 having an infrared filtering property is adopted, as shown by oblique lines in FIG. 22. The circular recess portion 211 provided on the surface of the transparent covering member 121 is formed to be thin than the rest portion, thereby it functions to reduce the infrared filtering property. In figures, the same numbers are attached to structural members, elements, portions or the like corresponding to those of the first embodiment. A detailed explanation for such corresponding structural members, elements, portions or the like is omitted.

According to use of the transparent covering member 121 having an infrared filtering property, it is possible to reduce the number of necessary parts because the cover 73 for an infrared communication used in the first embodiment is not required.

### THIRD EMBODIMENT

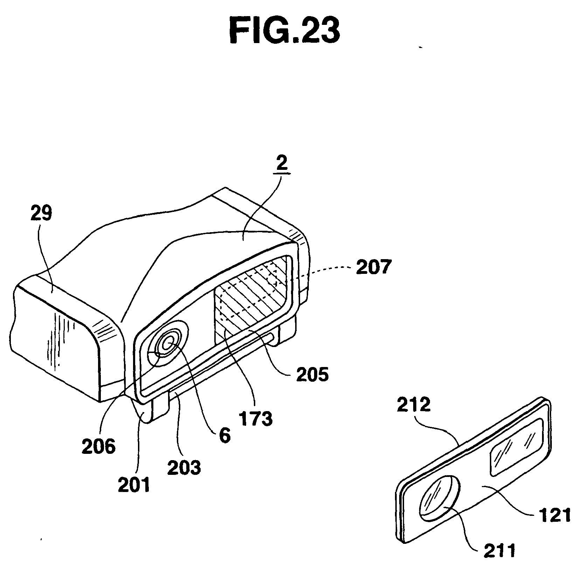

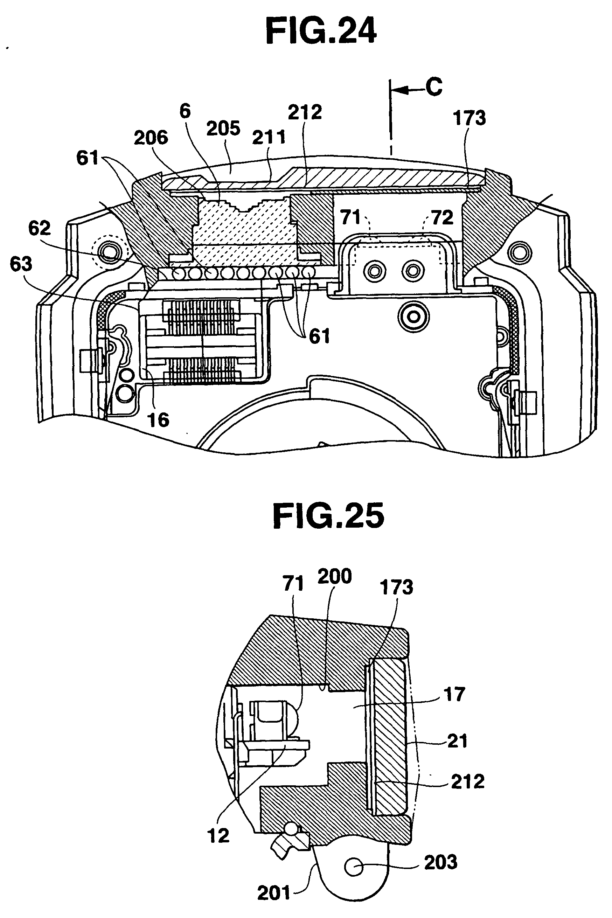

The third embodiment is different from the first embodiment in the following points. In the portable image capturing device according to the third embodiment, the cover 73 for an infrared communication in the first embodiment is not used, an infrared filtering seal 173 which is shown by oblique lines in FIG. 23, is adhered to the periphery of the front surface of the communication window 207 of the recess portion 205 for cover attachment, as shown in FIGS. 23 to 25. In the figures, the same numbers are attached to structural members, elements, portions or the like corresponding to those of the first embodiment. A detailed explanation for such corresponding structural members, elements, portions or the like is omitted.

According to use of the infrared filtering seal 173 adhered, without the cover 73 for an infrared communication used in the first embodiment, it is possible to mount parts with high density and to make the portable image capturing device small-sized.

### FOURTH EMBODIMENT

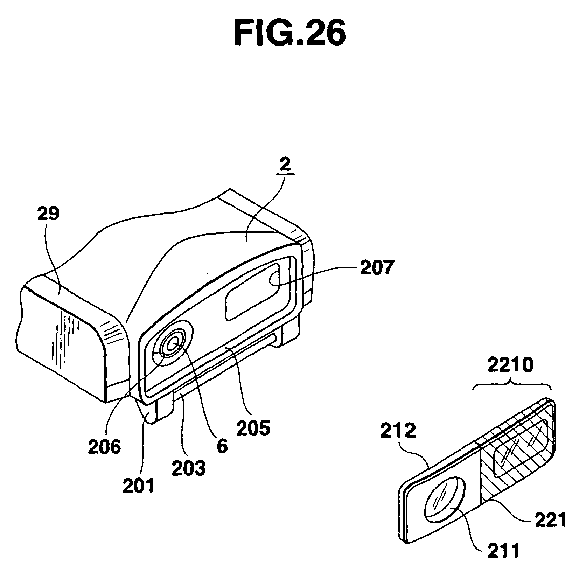

The fourth embodiment is different from the first embodiment in the following points. In the portable image capturing device according to the fourth embodiment, the cover 73 for an infrared communication in the first embodiment is not used, a transparent covering member 221 which has an infrared filter characteristic form portion 2210 (the range of which is shown by oblique lines in FIG. 26) in the side of the communication window 207 is adopted instead thereof. The transparent covering member 221 is produced by the two-color forming is used. In the figures, the same numbers are attached to structural members, elements, portions or the like corresponding to those of the first embodiment. A detailed explanation for such corresponding structural members, elements, portions or the like is omitted.

Because the side of the communication window 207 is covered by the infrared filter characteristic form portion 2210 of the transparent covering member 221 produced by the two-color forming, it is possible to reduce the number of necessary parts because the cover 73 for an infrared communication used in the first embodiment is not required.

### FIFTH EMBODIMENT

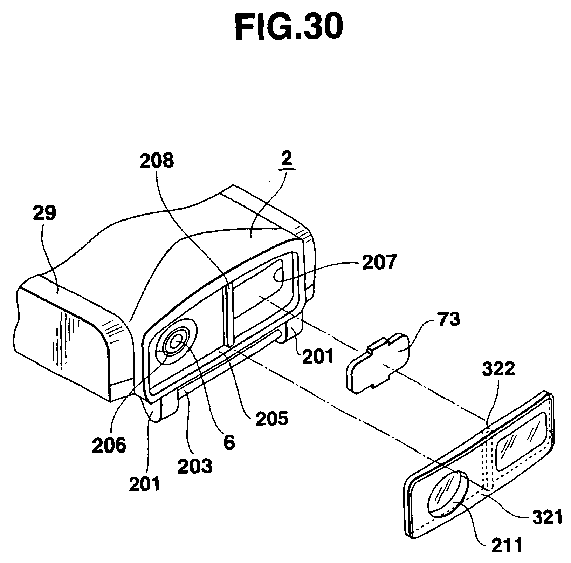

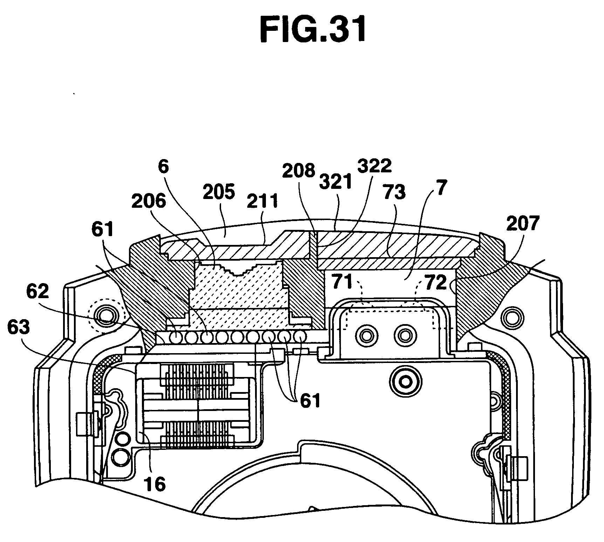

The fifth embodiment is different from the first embodiment in the following points. In the portable image capturing device according to the fifth embodiment, the black printed layer 212 in the first embodiment is not used, a rib 208 processed for positioning the transparent covering member 321 is disposed between the capturing window 206 of the recess portion 205 for cover attachment and the communication window 207, as shown in FIGS. 30 and 31. The rib 208 also plays a role to prevent the image capturing lens 6 and the infrared communication portion 7. from being adversely affected optically. In the transparent covering member 321, a recess portion 322 corresponding to the rib 208 is formed. In the figures, the same numbers are attached to structural members, elements, portions or the like corresponding to those of the first embodiment. A detailed explanation for such corresponding structural members, elements, portions or the like is omitted.

In this embodiment, because the black printed layer 212 in the first embodiment is not used and the recess portion 322 of the transparent covering member 321 is fitted to the rib 208 which is disposed between the capturing window 206 of the recess portion 205 for cover attachment and the communication window 207, it is possible to prevent the transparent covering member 321 from slipping off by shock. Such a structure make easy to assemble the transparent covering member 321 to the device body 2.

### SIXTH EMBODIMENT

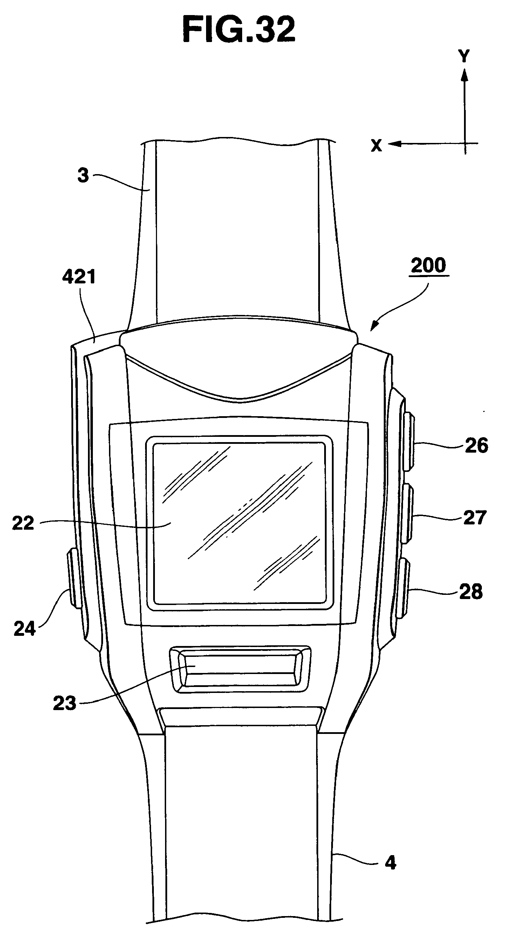

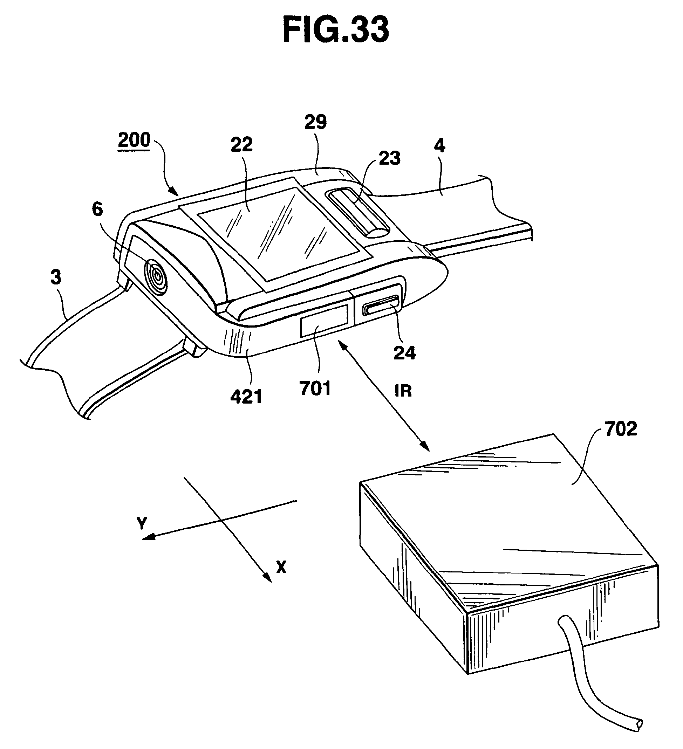

The sixth embodiment is different from the first embodiment in the following points. In the portable image capturing device according to the sixth embodiment, the image capturing portion and the infrared communication portion 701 are disposed in the device body (200) so that the camera direction for taking a photograph (Y-axis direction in FIGS. 32 and 33) by the image capturing lens 6 is approximately perpendicular to the infrared communication direction (X-axis direction in the figures) by the infrared communication portion 701. The side surfaces perpendicular to each other having the image capturing lens 6 and the infrared communication portion 701 are covered with a single transparent covering member 421. In FIG. 33, the reference numeral 702 denotes an apparatus for infrared communication, e.g., an infrared communication port apparatus which is connected to a PC. In the figures, the same numbers are attached to structural members, elements, portions or the like corresponding to those of the first embodiment. A detailed explanation for such corresponding structural members, elements, portions or the like is omitted.

According to this embodiment, because the camera direction for taking a photograph is approximately perpendicular to the infrared communication direction, in addition to the advantageous effects according to the first embodiment, it is possible to handle the device easily even in a condition of wearing the device on an arm while transmitting data by infrared communication, and to enable camera handling to take a photograph by remote control (using infrared ray).

### SEVENTH EMBODIMENT

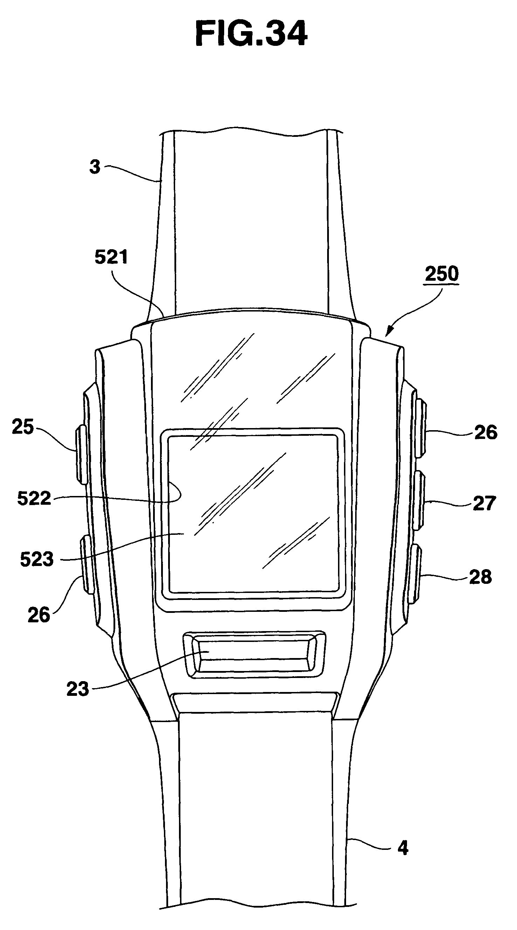

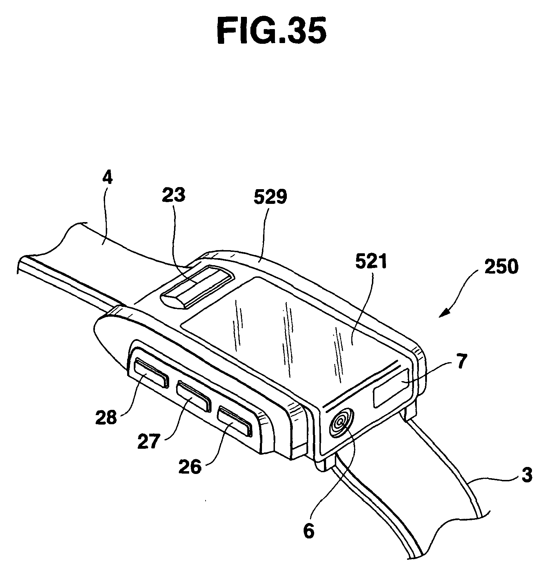

The seventh embodiment is different from the first embodiment in the following points. In the portable image capturing device according to the seventh embodiment, the device body 250 comprises a single transparent covering member 521 which covers both the data display portion (LCD) 521 and the side surface having the image capturing lens 6 and the infrared communication portion 7. In FIG. 34, the numeral 522 denotes a display window. In FIG. 35, the numeral 529 denotes a bezel. In the figures, the same numbers are attached to structural members, elements, portions or the like corresponding to those of the first embodiment. A detailed explanation for such corresponding structural members, elements, portions or the like is omitted.

According to the embodiment, because a single transparent covering member 521 which covers both the data display portion (LCD) 521 and the side surface is provided, it is possible to reduce the number of necessary parts.

Although the apparatus of the invention is applied to a watch in the above-described embodiment, it is not limited to this, and the invention can be applied to any portable electronic apparatus (portable image capturing device), e.g., a portable terminal and the like.

Also the structure or the like for the camera portion (image capturing portion) and the optical communication portion (infrared communication portion) are not limited to that of the embodiment. It is of course that other concrete detailed structures or the like of the apparatus of the invention may be changed appropriately.

## Claims

1. A portable image capturing device (1), comprising:
a device body (2, 200, 250),
an image capturing portion (6) and an optical communication portion (7, 701), which are provided on the device body, and
a transparent covering member (21, 121, 221, 321, 421, 521) provided on the device body,
**characterized in that**
said image capturing portion has a capturing window (206) and said optical communication portion has a communication window (207), both windows being disposed adjacent to each other; and
said transparent covering member covering both the image capturing portion and the optical communication portion.

2. The portable image capturing device as claimed in claim 1, further comprising an optical shielding structure (212, 208) between the image capturing portion and the optical communication portion.

3. The portable image capturing device as claimed in claim 2, wherein the optical shielding structure (212) is provided on the transparent covering member by printing.

4. The portable image capturing device as claimed in claim 2, wherein the optical shielding structure (208) is provided on the device body.

5. The portable image capturing device as claimed in claim 2, wherein the optical shielding structure (208) comprises a rib which is processed to mount the transparent covering member to the device body.

6. The portable image capturing device as claimed in one of claims 1 to 5, wherein the transparent covering member (121, 221) comprises a material having a filtering property to a light with specific wavelength.

7. The portable image capturing device as claimed in one of claims 1 to 6, wherein a lens (211) is formed in the transparent covering member at a position corresponding to the optical axis for image capturing from the image capturing portion.

8. The portable image capturing device as claimed in claim 7, wherein the lens is a concave lens.

9. The portable image capturing device as claimed in one of claims 1 to 8, wherein a portion of the transparent covering member comprises a transparent material at a position corresponding to the optical axis for image capturing from the image capturing portion, and a member (2210) having a filtering property to a light with specific wavelength is provided at a position corresponding to the optical axis for communication from the optical communication portion, and the transparent covering member is formed as a body.

10. The portable image capturing device as claimed in one of claims 1 to 9, wherein a sealing member (173) having a filtering property to a light with specific wavelength is disposed between the transparent covering member and the optical communication portion.

11. The portable image capturing device as claimed in one of claims 1 to 10, wherein the image capturing portion and the optical communication portion are provided in the device body (200) so that the optical axis for the image capturing from the image capturing portion is approximately perpendicular to the optical axis for communication from the optical communication.

12. The portable image capturing device as claimed in one of claims 1 to 11, wherein the transparent covering member (521) covers not only the image capturing portion and the optical communication portion in common but also a data display portion (523) as a body.

13. The portable image capturing device as claimed in one of claims 1 to 12, wherein the device body is provided with a wrist band (3, 4) and has a shape preferable to put on an operator's wrist.

14. The portable image capturing device as claimed in claim 13, wherein the wrist band can be rotated to be overlapped on the rear surface of the device body.

## Patentansprüche

1. Tragbare Bilderfassungsvorrichtung (1), die umfasst:
einen Vorrichtungskörper (2, 200, 250),
einen Bilderfassungsabschnitt (6) und einen optischen Datenübertragungsabschnitt (7, 701), die an dem Vorrichtungskörper vorhanden sind; und
ein transparentes Abdeckungselement (21, 121, 221, 321, 421, 521), das an dem Vorrichtungskörper vorhanden ist,
**dadurch gekennzeichnet, dass**
der Bilderfassungsabschnitt ein Erfassungsfenster (206) hat und der optische Datenübertragungsabschnitt ein Datenübertragungsfenster (207) hat, wobei beide Fenster benachbart zueinander angeordnet sind; und
das transparente Abdeckungselement sowohl den Bilderfassungsabschnitt als auch den optischen Datenübertragungsabschnitt abdeckt.

2. Tragbare Bilderfassungsvorrichtung nach Anspruch 1, die des Weiteren eine optische Abschirmstruktur (212, 208) zwischen dem Bilderfassungsabschnitt und dem optischen Datenübertragungsabschnitt umfasst.

3. Tragbare Bilderfassungsvorrichtung nach Anspruch 2, wobei die optische Abschirmstruktur (212) an dem transparenten Abdeckungselement durch Aufdrucken geschaffen wird.

4. Tragbare Bilderfassungsvorrichtung nach Anspruch 2, wobei die optische Abschirmstruktur (208) an dem Vorrichtungskörper vorhanden ist.

5. Tragbare Bilderfassungsvorrichtung nach Anspruch 2, wobei die optische Abschirmstruktur (208) eine Rippe umfasst, die zur Anbringung des transparenten Abdeckungselementes an dem Vorrichtungskörper bearbeitet ist.

6. Tragbare Bilderfassungsvorrichtung nach einem der Ansprüche 1 bis 5, wobei das transparente Abdeckungselement (121, 221) ein Material mit einer Filtereigenschaft für Licht mit spezifischer Wellenlänge umfasst.

7. Tragbare Bilderfassungsvorrichtung nach einem der Ansprüche 1 bis 6, wobei eine Linse (211) in dem transparenten Abdeckungselement an einer Position ausgebildet ist, die der optischen Achse zur Bilderfassung von dem Bilderfassungsabschnitt entspricht.

8. Tragbare Bilderfassungsvorrichtung nach Anspruch 7, wobei die Linse eine konkave Linse ist.

9. Tragbare Bilderfassungsvorrichtung nach einem der Ansprüche 1 bis 8, wobei ein Abschnitt des transparenten Abdeckungselementes ein transparentes Material an einer Position umfasst, die der optischen Achse zur Bilderfassung von dem Bilderfassungsabschnitt entspricht, ein Element (2210) mit einer Fütereigenschaft für ein Licht mit spezifischer Wellenlänge an einer Position vorhanden ist, die der optischen Achse zur Datenübertragung von dem optischen Datenübertragungsabschnitt entspricht, und das transparente Abdeckungselement als ein Körper ausgebildet ist.

10. Tragbare Bilderfassungsvorrichtung nach einem der Ansprüche 1 bis 9, wobei ein Dichtungselement (173) mit einer Filtereigenschaft für ein Licht mit spezifischer Wellenlänge zwischen dem transparenten Abdeckungselement und dem optischen Datenübertragungsabschnitt angeordnet ist.

11. Tragbare Bilderfassungsvorrichtung nach einem der Ansprüche 1 bis 10, wobei der Bilderfassungsabschnitt und der optische Datenübertragungsabschnitt in dem Vorrichtungskörper (200) so vorhanden sind, dass die optische Achse für die Bilderfassung von dem Bilderfassungsabschnitt annähernd senkrecht zu der optischen Achse zur Datenübertragung von dem optischen Datenübertragungsabschnitt ist.

12. Tragbare Bilderfassungsvorrichtung nach einem der Ansprüche 1 bis 11, wobei das transparente Abdeckungselement (521) nicht nur den Bilderfassungsabschnitt und den optischen Datenübertragungsabschnitt zusammen, sondern auch einen Datenanzeigeabschnitt (523) als ein Körper abdeckt.

13. Tragbare Bilderfassungsvorrichtung nach einem der Ansprüche 1 bis 12, wobei der Vorrichtungskörper mit einem Armband (3, 4) versehen ist und eine Form hat, die vorzugsweise zur Anbringung an dem Handgelenk einer Bedienungsperson dient.

14. Tragbare Bilderfassungsvorrichtung nach Anspruch 13, wobei das Armband so gedreht werden kann, dass es die Rückseite des Vorrichtungskörpers überdeckt.

## Revendications

1. Un dispositif de prise de vue portable (1), comprenant :
un corps de dispositif (2, 200, 250),
une partie de prise de vue (6) et une partie de communication optique (7, 701), qui sont établies sur le corps de dispositif, et
un élément de recouvrement transparent (21 , 121, 221, 321 , 421 , 521) placé sur le corps de dispositif,
**caractérisé en ce que**
la partie de prise de vue a une fenêtre de prise de vue (206) et la partie de communication optique a une fenêtre de communication (207), les deux fenêtres étant disposées de façon mutuellement adjacente; et
l'élément de recouvrement transparent recouvre à la fois la partie de prise de vue et la partie de communication optique.

2. Le dispositif de prise de vue portable selon la revendication 1, comprenant en outre une structure de blindage optique (212, 208) entre la partie de prise de vue et la partie de communication optique.

3. Le dispositif de prise de vue portable selon la revendication 2, dans lequel la structure de blindage optique (212) est formée par impression sur l'élément de recouvrement transparent.

4. Le dispositif de prise de vue portable selon la revendication 2, dans lequel la structure de blindage optique (208) est formée sur le corps de dispositif.

5. Le dispositif de prise de vue portable selon la revendication 2, dans lequel la structure de blindage optique (208) comprend une nervure qui est traitée pour monter l'élément de recouvrement transparent sur le corps de dispositif.

6. Le dispositif de prise de vue portable selon l'une quelconque des revendications 1 à 5, dans lequel l'élément de recouvrement transparent (121, 221) consiste en une matière ayant une propriété de filtrage pour une lumière d'une longueur d'onde spécifique.

7. Le dispositif de prise de vue portable selon l'une quelconque des revendications 1 à 6, dans lequel une lentille (211) est formée dans l'élément de recouvrement transparent à une position correspondant à l'axe optique pour la prise de vue par la partie de prise de vue.

8. Le dispositif de prise de vue portable selon la revendication 7, dans lequel la lentille est une lentille concave.

9. Le dispositif de prise de vue portable selon l'une quelconque des revendications 1 à 8, dans lequel une partie de l'élément de recouvrement transparent comprend une matière transparente dans une position correspondant à l'axe optique pour la prise de vue par la partie de prise de vue, et un élément (2210) ayant une propriété de filtrage pour une lumière d'une longueur d'onde spécifique est placé en une position correspondant à l'axe optique pour la communication à partir de la partie de communication optique, et l'élément de recouvrement transparent est formé en une seule pièce.

10. Le dispositif de prise de vue portable selon l'une quelconque des revendications 1 à 9, dans lequel un élément d'obturation (173) ayant une propriété de filtrage d'une lumière d'une longueur d'onde spécifique est disposé entre l'élément de recouvrement transparent et la partie de communication optique.

11. Le dispositif de prise de vue portable selon l'une quelconque des revendications 1 à 10, dans lequel la partie de prise de vue et la partie de communication optique sont incorporées dans le corps de dispositif (200) de façon que l'axe optique pour la prise de vue par la partie de prise de vue soit approximativement perpendiculaire à l'axe optique pour la communication par la partie de communication optique.

12. Le dispositif de prise de vue portable selon l'une quelconque des revendications 1 à 11, dans lequel l'élément de recouvrement transparent (521) recouvre non seulement la partie de prise de vue et la partie de communication optique en commun, mais également une partie de visualisation de données (523), en une seule pièce.

13. Le dispositif de prise de vue portable selon l'une quelconque des revendications 1 à 12, dans lequel le corps de dispositif est muni d'un bracelet (3, 4) et a une forme préférable pour être placé sur le poignet d'un utilisateur.

14. Le dispositif de prise de vue portable selon la revendication 13, dans lequel on peut faire tourner le bracelet de façon à superposer le bracelet et la surface arrière du corps du dispositif.
